# EUROPÄISCHE PATENTANMELDUNG

(11) **EP 4 226 752 A1**
(43) Veröffentlichungstag der Anmeldung: **16.08.2023**
(21) Anmeldenummer: 23156499.8
(22) Anmeldetag: 14.02.2023
(51) Int. Cl.: A01B 69/02, A01B 59/00, A01B 63/111

(54) **FAHRZEUG-GERÄTEKOMBINATION MIT STECKVERBINDUNG**

(30) Priorität: 15.02.2022 DE 102022103504
(71) Anmelder: Lemken GmbH & Co KG, 46519 Alpen (DE)
(72) Erfinder: Hinzke, Louis, 47495 Rheinberg (DE); Düpmann, Jörg, 46499 Hamminkeln (DE); Paulessen, Georg, 47877 Willich (DE); Nepicks, Johannes, 46519 Alpen (DE)

(57) **Zusammenfassung**

Es wird Steckverbindung (4) zur elektrischen Kopplung eines Fahrzeuges (2) mit einem Arbeitsgerät (1) vorgeschlagen, wobei das Arbeitsgerät (1) dem Fahrzeug (2) beweglich zugeordnet ist und das Fahrzeug (2) oder das zugeordnete Arbeitsgerät (1) die Steckverbindung (4) aufweist, welche zumindest ein Sensor (8) zur Erfassung zumindest einer physikalischen Größe enthält.

## Beschreibung

Die Erfindung betrifft eine Kombination aus einem Fahrzeug sowie einem dem Fahrzeug beweglich zugeordneten Arbeitsgerät gemäß dem Oberbegriff des Patentanspruches 1.

Kombinationen aus landwirtschaftlichen Fahrzeugen und Geräten sind beispielsweise aus EP2042276B1 bekannt. Dort weisen Fahrzeuge und Geräte verschiedene Sensoren auf, anhand welcher mittels einer Steuerung auf dem Fahrzeug die Lage eines Gerätes relativ zur Fahrzeugneigung angepasst wird. Berührungslos wird mittels einer Kamera die Lage eines Gerätes relativ zu einem Fahrzeug in EP3300560A1 erfasst.

Aufgabe der Erfindung ist es, eine physikalische Größe eines Fahrzeuges oder eines Gerätes zu erfassen, ohne dass hierzu ein Sensor dediziert auf einem Gerät oder Fahrzeug der Kombination vorgehalten und befestigt werden muss.

Diese Aufgabe wird durch die Merkmale des kennzeichnenden Teiles des Anspruches 1 gelöst.

Eine Kombination aus einem Fahrzeug und einem Arbeitsgerät weist eine Steckverbindung auf. Diese Steckverbindung dient vorzugsweise zur elektrischen Kopplung des Fahrzeuges mit dem Arbeitsgerät. Die elektrische Kopplung ist beispielsweise für eine Beleuchtungsanlage erforderlich, ebenso aber zum Betrieb elektrischer Antriebe oder elektrischer Leistungsübertragung und/oder zur Kommunikation und Datenübertragung, beispielsweise nach der Norm ISO 11783, vorgesehen. Dabei ist das Arbeitsgerät dem Fahrzeug beweglich zugeordnet. Das Fahrzeug ist meist als Zugmaschine oder mobile Antriebsvorrichtung ausgebildet, kann aber auch ein Anhänger innerhalb einer Zugkombination sein. Das Gerät ist vorzugsweise ein landwirtschaftliches Arbeitsgerät, kann aber ebenfalls ein Anhänger oder weiterer Anhänger innerhalb einer Zugkombination sein. Die bewegliche Zuordnung zwischen dem Fahrzeug und dem Arbeitsgerät wird mittels einer lösbaren Koppeleinrichtung realisiert.

Dies kann eine Anhängekupplung oder ein bewegliches Lenkergestänge sein, welches beispielsweise als Dreipunkthydraulik zum Aushub eines landwirtschaftlichen Arbeitsgerätes ausgebildet ist. Das Fahrzeug und/oder das dem Fahrzeug zugeordneten Arbeitsgerät weisen zumindest eine Steckverbindung auf, welche der Übertragung von elektrischem Strom und/oder Signalen dient. In dieser Steckverbindung ist zumindest ein Sensor angeordnet. Dieser Sensor dient zur Erfassung zumindest einer physikalischen Größe. Insbesondere erfasst der Sensor nichtelektrische, physikalische Größen durch eine elektrische Messung. Als physikalische Größen verstehen sich Längen, Abstände, Orientierungen im Raum, Neigungen, translatorische und/oder rotatorische Bewegungen oder Beschleunigungen oder Drehraten, Drücke oder Druckunterschiede, ebenso aber auch magnetische Felder oder (elektromagnetische Strahlung, Signale oder Feldstärken, wie sie beispielsweise bei Laufzeitmessungen, optischen Messungen oder bei räumlicher Ortung verwendet werden. Durch die Relativbewegung des Arbeitsgerätes zum Fahrzeug oder umkehrt kann sich die Steckverbindung in seiner Lage ändern. Somit kann eine insbesondere durch die Relativbewegung entstehende oder sich ändernde physikalische Größe über den Sensor ermittelt werden.

Die Steckverbindung weist vorzugsweise eine Signalverbindung zur Übermittlung von zumindest einem Parameter der durch den zumindest einen Sensor erfassten physikalischen Größe auf. Durch die Signalverbindung kann der Sensor, welcher der Steckverbindung zugeordnet ist, den zumindest einen Parameter an eine Auswerteeinrichtung oder eine Anzeigeeinrichtung übermitteln. Bereits innerhalb oder in der Nähe des Sensors kann die gemessene physikalischen Größe in ein übertragbares Signal konvertiert werden. Das Signal ist bevorzugt ein elektrisch, elektromagnetisch oder optisch übertragbares oder übermittelbares Signal. Das Signal kann einen analogen oder digitalen Wert oder eine Zeichen- oder Zahlenfolge sein. Das Signal ist insbesondere zur kabelgebundenen oder drahtlosen Übermittlung für kurze bis mittlere Distanzen, wie sie im Betrieb der Fahrzeug-Gerätekombination auftreten, geeignet.

Vorteilhafterweise ist der Sensor als Neigungssensor, als Beschleunigungssensor, als Drehratensensor oder als Gyroskop ausgebildet. Hiermit können Relativbewegungen oder geänderte Positionen zwischen Fahrzeug und Arbeitsgerät entweder in einer oder gleich mehreren Richtungen detektiert und gemessen werden. Dazu können auch mehrere Einzelsensoren in einem Gesamtsystem verschieden ausgerichtet und/oder gruppiert werden. Vorzugsweise sind die Einzelsensoren oder das Gesamtsystem des Sensors in einem integrierten Schaltkreis, eine elektromechanische Sensoreinheit, als SOC (system on a chip), als oder auf einer Trägerplatine/Leiterplatte oder PCB (printed circuit board) ausgebildet oder angeordnet. Zu letzterem bietet sich zudem die Kombination mit einem Signalkonverter, einer Signalübertragungseinheit oder einem Transmitter an.

Insbesondere weist die Steckverbindung zumindest einen lösbaren Teil und einen feststehenden Teil auf. Dabei ist der feststehende Teil entweder mit dem Fahrzeug oder dem Arbeitsgerät unbeweglich verbunden. Der lösbare Teil weist den Sensor zur Ermittlung der physikalischen Größe auf. Hierdurch können verschiedene Fahrzeuge bzw. Arbeitsgeräte ausgetauscht werden, ohne dass diese einzeln mit Sensoren ausgestattet werden müssen.

Vorzugsweise ist in der Kombination aus einem Fahrzeug und dem Arbeitsgerät die Auswerteeinrichtung dem Fahrzeug und die Steckverbindung dem Gerät oder umgekehrt die Auswerteeinrichtung dem Gerät und die Steckverbindung dem Fahrzeug zugeordnet. Je nach Zuordnung der Auswerteeinrichtung kann entweder das Gerät oder das Fahrzeug mittels der Steckverbindung elektrisch getrennt und ausgetauscht werden. Dabei bleibt der Teil der Steckverbindung, welchem der Sensor zugeordnet ist, auf der Seite der Auswerteeinrichtung. Zumindest mittelbar sind die Auswerteeinrichtung und der Teil der Steckverbindung, welchem der Sensor zugeordnet ist, durch ein elektrisches Kabel mit einem oder mehreren elektrischen Leitern verbunden. Vorzugsweise findet eine elektrische Energieversorgung der Auswerteeinrichtung und/oder des Sensors oder seiner Übertragungseinrichtungen ebenfalls über das Kabel und/oder die Steckverbindung statt.

In einer besonderen Ausführungsform ist die Auswerteeinrichtung als Jobrechner oder Mobilcomputer ausgebildet, wobei der Jobrechner einen zumindest weiteren Parameter des Arbeitsgerätes oder des Fahrzeuges ermittelnd oder beeinflussend ausgebildet ist. Es können somit neben der gemessenen physikalischen Größe des Sensors aus der Steckverbindung weitere Signal- oder Messwerte anderer physikalischen Größen des Fahrzeuges oder des Arbeitsgerätes ausgewertet, verglichen und/oder angezeigt oder zur Steuerung, Einstellung oder Regelung von Werten oder Eigenschaften des Fahrzeuges und/oder Anbaugerätes verwendet werden. Insbesondere können Aktoren durch die Auswerteeinrichtung angesteuert werden, welche Positionen, Neigungen, Lenk- oder Korrekturbewegungen am Fahrzeug oder Arbeitsgerät oder deren Teilen einstellen oder bewirken.

Vorzugsweise ist zumindest ein Aktor dem Arbeitsgerät und / oder dem Fahrzeug zugeordnet. Dabei ist der Aktor derart angeordnet, dass die räumliche Lage zwischen dem Arbeitsgerät und dem Fahrzeug durch Betätigen des Aktors zumindest mittelbar eingestellt oder geändert werden kann. Soll eine Nickbewegung zwischen Arbeitsgerät und dem Fahrzeug eingestellt werden, kann der Aktor beispielsweise als hydraulischer Oberlenker auf das Arbeitsgerätes oder auf eine Knickdeichsel, einen beweglichen Anbauturm oder eine Tiefenführung des Arbeitsgerätes wirken. Für eine seitliche Lenk- oder Verschiebebewegung zwischen Arbeitsgerät und dem Fahrzeug kann der Aktor auf eine Lenkachse des Anbaugerätes oder des Fahrzeuges wirken, ebenso auf eine Schwenkdeichsel oder einen Verbindungsrahmen zwischen Anbaugerät oder Fahrzeug. Weitere Kipp-, Nick- oder Hubbewegungen zwischen Anbaugerät oder Fahrzeug können beispielsweise über eine Hubeinrichtung oder einstellbare Tiefenführungselemente realisiert werden, welche mit einem oder mehreren Aktoren betätigt werden. Insbesondere sind die Aktoren als hydraulische, pneumatische oder elektrische Stellmotoren ausgebildet. Diese lassen sich über Stellsignale der Auswerteeinrichtung ansteuern.

Die Erfindung zeichnet sich insbesondere dadurch aus, dass durch Zuordnung eines Sensors zu einer Steckverbindung die Bewegung der Steckverbindung und somit des Fahrzeuges oder des Arbeitsgerätes, welchem ein Teil der Steckverbindung fest und unbeweglich zugeordnet ist, erfasst werden kann. Dabei kann das Fahrzeug oder das Arbeitsgerät mit dem festen Teil der Steckverbindung beliebig ausgetauscht werden, während die Sensorik im lösbaren Teil der Steckverbindung verbleibt. Beispielsweise hält ein landwirtschaftlicher Betrieb Zugmaschinen verschiedener Fabrikate vor, welche beliebig vor einem Arbeitsgerät, wie beispielsweise einem Bodenbearbeitungsgerät, einem Ausbringgerät zur Saat und/oder Düngung oder einem Fahrzeug mit lenkbarer Deichsel oder Achse, ausgetauscht werden können. Dabei verbleibt die zum Betrieb des Arbeitsgerätes erforderliche Steuerungs- oder Messtechnik inklusive des lösbaren Teils der Steckverbindung und einem dazugehörigen Verbindungskabels am Gerät.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 ein Fahrzeug 2 mit angebautem Arbeitsgerät 1 in Seitenansicht,
Fig.2 das Fahrzeug 2 mit angewinkelt eingestelltem Arbeitsgerät 1,
Fig. 3 das Fahrzeug 2 mit Arbeitsgerät 1 auf unebenem Boden 20,
Fig. 4 ein Fahrzeug 2 mit angehängtem Arbeitsgerät 1 in Draufsicht,
Fig. 5 und 6 einen Stecker 6 der Stechverbindung 4

### Figurenbeschreibung

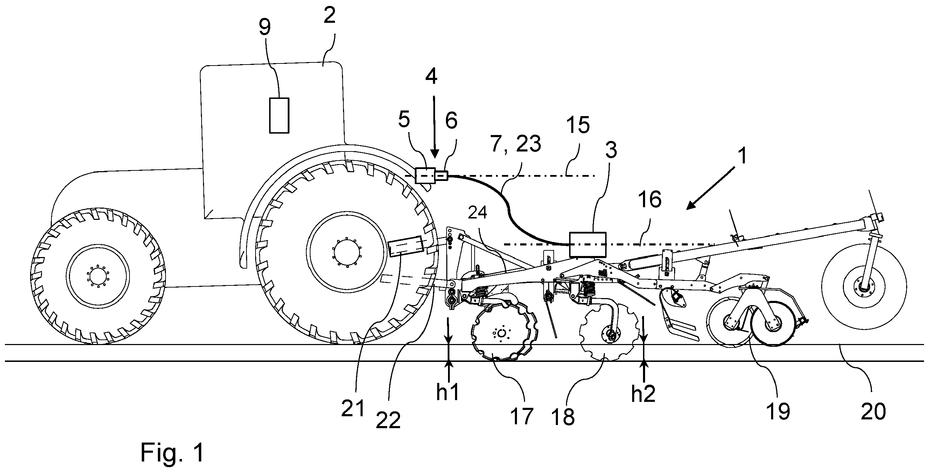

Figur 1 zeigt ein als landwirtschaftliche Zugmaschine ausgebildetes Fahrzeug 2 mit einem Arbeitsgerät 1, welches sich auf einer Bodenoberfläche 20 eines Ackers fortbewegt. Das Arbeitsgerät 1 ist als Bodenbearbeitungsgerät mit einer vorderen Reihe von Arbeitswerkzeugen 17, hier Bodenbearbeitungswerkzeuge, und einer hinteren Reihe von Arbeitswerkzeugen 18, ebenfalls Bodenbearbeitungswerkzeuge, dargestellt, welche den Boden des Ackers in einer Arbeitstiefe h1, h2 unterhalb der Bodenoberfläche 20 bearbeiten. Die Arbeitstiefe der Arbeitswerkzeuge 17, 18 kann über die als Packerwalze ausgebildete Tiefenführung 19 eingestellt und bei Bedarf verändert werden. Das Arbeitsgerät ist in Figur 1 optimal eingestellt, da die Arbeitstiefe h1 der vorderen Bodenbearbeitungswerkzeuge 17 und die Arbeitstiefe der hinteren Bodenbearbeitungswerkzeuge 18 gleich tief relativ zur ebenen Bodenoberfläche 20 eingestellt sind. Damit verläuft die Geräteebene 16 horizontal und parallel zur Bodenoberfläche 20. Die Fahrzeugebene 15 verläuft parallel und horizontal zu den Bodenkontaktflächen der Räder des Fahrzeuges 2, welche ebenfalls auf der Bodenoberfläche 20 aufstehen. Das Arbeitsgerät 1 mit seinem Geräterahmen ist gelenkig über die Unterlenker 22 und einen als hydraulisch einstellbaren Oberlenker ausgebildeten Aktor 21 an das Fahrzeug angebaut. Ein Aushub des Arbeitsgerätes erfolgt mittels weiterer, nicht dargestellter Aktoren über die Unterlenker 22 sowie den Aktor 21, welcher in diesem Fall als Pendelstrebe fungiert.

Am hinteren Ende des Fahrzeuges 2 ist eine Steckdose 5 der Steckverbindung 4 fest am Fahrzeug 2 angebracht. Die Anbringung der Steckdose 5 erfolgt an feststehenden Karosserie- oder Rahmenteilen des Fahrzeuges 2. Die Steckkontaktbuchsen der Steckdose 5 sind dabei vorzugsweise parallel zur Fahrzeugebene 15 ausgerichtet. Der lösbare Teil der Steckverbindung 4 ist als Stecker 6 ausgebildet und über ein stromführendes Kabel 7 mit einer Auswerteeinrichtung 3 auf dem Gerät 1 verbunden. So lange der Stecker 6 in der Steckdose 5 eingesteckt bleibt, nimmt dieser mit seinen Steckkontakten die gleiche Ausrichtung wie die Steckkontaktbuchsen der Steckdose 5 und somit ebenfalls eine parallele Lage zur Fahrzeugebene 15 ein. Ändert sich die Winkellage des Fahrzeuges 2, ändert sich zugleich auch die Neigung der Fahrzeugebene 15 sowie der Steckverbindung 4 mit seiner fahrzeugfesten Steckverbindung 5 und dem eingestecktem Stecker 6. Ein beliebiger Bewegungsausgleich zwischen dem Stecker 6 und der Auswerteeinrichtung 3 wird über das flexible Kabel 7 ausgeglichen. Die Auswerteeinrichtung 3 ist fest mit dem Rahmen 24 des Arbeitsgerätes 1 verbunden und parallel zur Geräteebene 16 ausgerichtet. Wie später unten beschrieben, ist dem Stecker 6 ein Sensor zugeordnet, welcher eine Lage- oder Neigungsänderung des Steckers 6 detektiert. Ein ähnlicher, weiterer Sensor ist der Auswerteeinrichtung 3 zugeordnet. Ändert sich die Lage des Fahrzeuges 2 und somit seiner Fahrzeugebene 15 sowie der Steckverbindung 4 mit dem in die Steckdose 5 eingesteckten Stecker 6, so wird dies durch den Sensor im Stecker zwangsläufig detektiert und gemessen. Der Wert der Lageänderung wird über die Signalverbindung 23 an die Auswerteeinheit 3 übermittelt. Dies kann drahtlos per Funk oder über das Kabel 7 erfolgen. Ebenso kann eine Signalauswertung gleich innerhalb des Steckers oder auf einer weiteren Auswerteeinrichtung und/oder mit einer Anzeigevorrichtung 9 auf dem Fahrzeug erfolgen. Die Signalübertragung kann auch hier drahtlos per Funk oder kabelgebunden über weitere Kontaktbuchsen der Steckdose 5 erfolgen. Verwendet man ein Funksignal, beispielsweise nach WLAN oder Bluetooth-Standard, kann als Anzeigevorrichtung 9 auch ein handelsübliches Mobiltelefon oder ein Tablett-Computer verwendet werden, welcher im Sichtbereich eines Fahrers des Fahrzeuges 2 angeordnet ist.

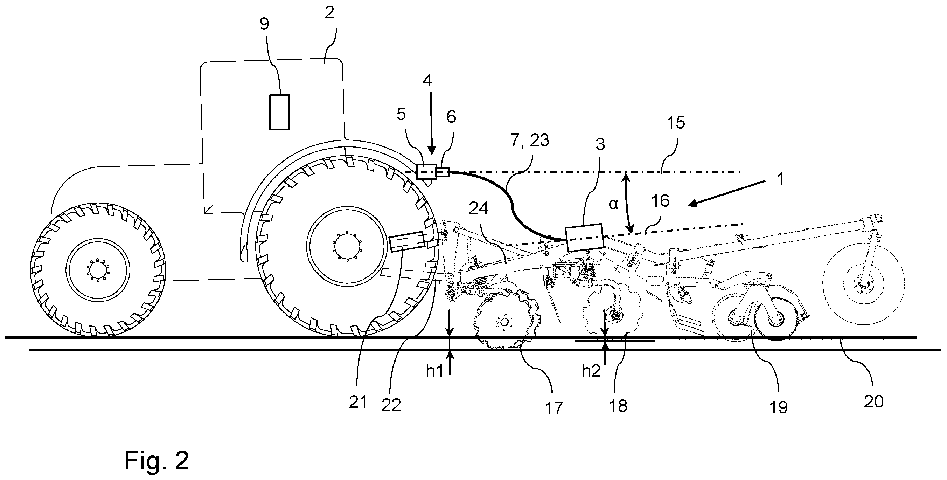

Figur 2 zeigt die Kombination aus Fahrzeug 2 und Arbeitsgerät 1 aus Figur 1 mit gleichen Bezugszeichen, jedoch in einer Fehlstellung, in welcher das Arbeitsgerät 1 mit seiner Geräteebene 16 um den Winkel α zu weit nach vorne geneigt ist. Im dargestellten Fall unterscheiden sich die Arbeitstiefen h1 der vorderen Reihe von Arbeitswerkzeugen 17 und der Arbeitstiefe h2 der hinteren Reihe von Arbeitswerkzeugen 18, welche kaum in die Bodenoberfläche 20 eingreifen. Durch den in der Auswerteeinheit 3 eingebauten Sensor kann die Winkeländerung α zwischen der schrägen Geräteebene 16 und der parallel zur Bodenoberfläche 20 ausgerichteten Fahrzeugebene 15 verglichen werden, da der Lageunterschied zwischen der Auswerteeinheit 3 und dem Stecker 6 und seinem innenliegenden Sensor mittels der gemessenen Werte bekannt ist. Über ein Stellsignal, welches von der Auswerteeinheit 3 ausgeht, kann der als hydraulischer Oberlenker ausgebildete Aktor 21 betätigt werden, so dass sich eine optimale Lage des Arbeitsgerätes 1, wie in Figur 1 dargestellt, wieder einstellt und die Winkeländerung α zwischen der Fahrzeugebene 15 und der Geräteebene 16 etwa 0 (null) beträgt. Ebenso kann der Fahrer des Fahrzeuges 2 auch manuell den Aktor 21 anhand der auf der Anzeigevorrichtung 9 angezeigten Werte korrigieren.

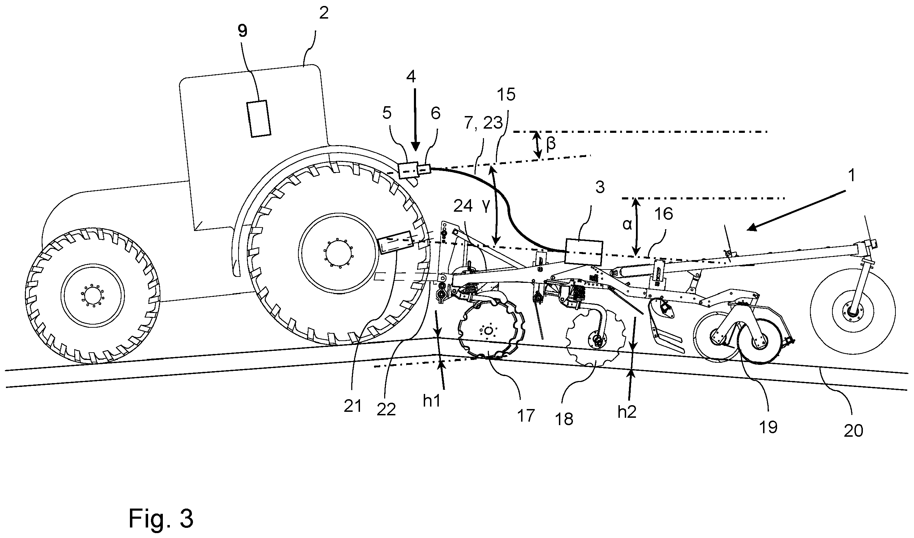

Analog zu Figur 2 zeigt Figur 3 mit gleichen Bezugszeichen eine weitere Möglichkeit einer Fehlstellung des Arbeitsgerätes 1 zum Fahrzeug 2, wie sie beispielsweise in unebenem Gelände an einer Kuppierung auftreten kann. Das Arbeitsgerät verläuft zwar noch parallel zur Bodenoberfläche 20, ist aber zur Horizontalen mit der Geräteebene 16 um den Winkel α nach hinten geneigt. Zur vorderen Seite des Arbeitsgerätes 1 hin hat das Fahrzeug 2 bereits die Kuppierung überfahren, so dass das Fahrzeug 2 mit seiner Fahrzeugebene bereits um den Winkel β nach vorne geneigt ist. So droht die Arbeitstiefe h1 der vorderen Reihe von Arbeitswerkzeugen 17 zur höchsten Stelle der Kuppe hin gemessen den geplanten Wert h2 der hinteren Reihe von Arbeitswerkzeugen 18 zu überschreiten. Der Winkel α wird durch einen Neigungssensor in der Auswerteeinheit 3 gemessen, der Winkel β über einen Sensor in der Steckverbindung 4 beziehungsweise dem Stecker 6. Insgesamt ergibt sich eine Winkeldifferenz γ, welche nach Überfahrt der Kuppe zu korrigieren und gegen 0 (null) zu führen ist. Dies erfolgt durch Vergleich der Winkel α und β in der Auswerteeinheit 3. Durch eine zeitliche oder wegstreckenbasierte Zuordnung der gemessenen Winkel und/oder der Erfassung einer Drehrate mit den Sensoren in der Steckverbindung 4 beiziehungsweise im Stecker 6 und/oder in der Auswerteeinheit 3 kann die Arbeitstiefe h1 der vorderen Reihe von Bodenbearbeitungswerkzeugen 17 und später auch die Arbeitstiefe h2 der hinteren von Bodenbearbeitungswerkzeugen 18 durch die Auswerteeinheit 3 verrechnet und automatisch oder anhand der angezeigten Werte auf der Anzeigevorrichtung 9 durch den Fahrer des Fahrzeuges 2 manuell eingeregelt oder eingestellt werden. Dabei werden die Arbeitstiefen h1 und/oder h2 manuell oder durch eine Regelfunktion der Auswerteeinheit 3, indem der Aktor 21 zum richtigen Zeit- oder Wegpunkt aus- oder eingefahren wird, verändert oder angeglichen. Ebenso können einer oder mehrere, nicht dargestellte Aktoren zwischen Tiefenführungseinrichtung 19 und dem Rahmen 24 des Arbeitsgerätes derart angeordnet werden, dass die Tiefenführungseinrichtung in der Höhe relativ zum Rahmen 24 und somit den daran befestigten Reihen von Bodenbearbeitungswerkzeugen 17 und 18 verändert werden kann. Auch diese Aktoren können manuell oder automatisch anhand der gemessenen physikalischen Größen zur Anpassung der Arbeitstiefen h1 und h2 angesteuert werden.

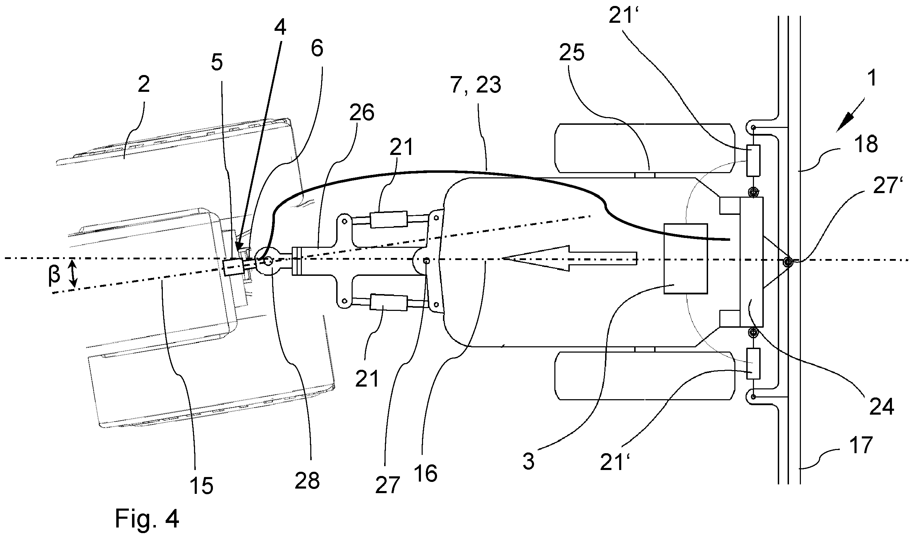

Verdreht man das Bezugskoordinatensystem und betrachtet die Kombination von Arbeitsgerät 1 und Fahrzeug 2 aus der Draufsicht, ist es ersichtlich, dass das gleiche System auch zum Ausgleich von Lenkbewegungen analog verwendet werden kann. Ein solcher Fall ist als Zugkombination aus einem Fahrzeug 2 sowie einem als Anhänger ausgebildetem Arbeitsgerät 1, bestehend aus einem Rahmen 24 und einer in dessen hinteren Bereich angeordneter Fahrwerksachse 25, in Figur 4 dargestellt. Das Fahrzeug 2 ist über seine Anhängekupplung 28 und einer Deichsel 26 lenkbar mit dem Arbeitsgerät 1 verbunden und hat bereits eine Fahrtrichtungsänderung um den Winkel β eingeschlagen, welcher sich aus der Ausrichtung der Fahrzeugebene 15 und der Geräteebene 16 ergibt. Beide Ebenen 15 und 16 stehen senkrecht zur Bodenoberfläche, auf welcher sich Fahrzeug 2 und Arbeitsgerät 1 bewegen. Mittels zumindest einem Sensor wird eine Winkeländerung, Beschleunigung oder Drehrate des Fahrzeuges 2 um die Hochachse relativ zum angehängtem Arbeitsgerät 1 als Lenkbewegung des Fahrzeuges 2 gemessen, indem die vorgenannten physikalischen Größen durch den Sensor in der Steckverbindung 4 beziehungsweise im Stecker 6 detektiert und ermittelt werden. Da die Steckdose 5 der Steckverbindung 4 fest dem Fahrzeug 2 zugeordnet ist, nimmt diese gemeinsam mit der Fahrzeugebene 15 und somit auch dem Stecker 6 und dem darin enthaltenen Sensor die Richtungsänderung um den Winkel β ein. Über das flexible Kabel 7 zur Stromversorgung des Arbeitsgerätes 1 bzw. der Auswerteeinheit 3 wird der gemessene Wert der Richtungsänderung β mittels der Signalverbindung 23 an die Auswerteeinheit 3 übertragen. Zugleich kann auf der Auswerteeinheit 3 ein weiterer Sensor enthalten sein, wodurch ein Vergleich der Richtungsänderung β des Fahrzeuges 2 und der Ausrichtung des Arbeitsgerätes 1, welche seiner Geräteebene 16 entspricht, ermöglich wird. Anhand dieser Daten kann manuell oder automatisch durch die Auswerteeinheit 3 zumindest ein Aktor 21 betätigt werden. Hierdurch kann beispielsweise die Deichsel 26 um einen Gelenkpunkt 27 des Rahmens 24 seitlich verschwenkt werden. Durch die schwenkbare Deichsel 26 kann ein spurtreuer Nachlauf der Räder der Fahrwerksachse 25 durch die Fahrspur des Fahrzeuges 2 realisiert werden, insbesondere bei Kurvenfahrt der Zugkombination. Alternativ oder zugleich kann neben der schwenkbaren Deichsel 26 auch die Fahrwerksachse 25 als lenkbare Achse ausgebildet sein, in welcher ein nicht dargestellter Aktor die Spur der Räder des Arbeitsgerätes 1 relativ zum Arbeitsgerät 1 bzw. seines Rahmens 24 einstellt. Durch hinterlegte Parameter oder Rechenalgorithmen in der Auswerteeinheit 3 kann eine spurtreue Lenkkorrektur des Arbeitsgerätes 1 sowohl im Betrieb bei Vorwärtsfahrt (dargestellter Pfeil) als auch zum Rangieren in Rückwärtsfahrt verwendet werden. Analog oder darüber hinaus kann über weitere Aktoren 21' auch die Ausrichtung von Arbeitswerkzeugen 17 und 18 relativ zur eingeschlagenen Fahrtrichtung oder zum Rahmen 24 des Arbeitsgerätes 1 , vorzugsweise um eine oder mehrere Gelenkachsen 27`, erfolgen, so dass auch die Arbeitswerkzeuge 17 und 18 spurtreu der Fahrtrichtung des Fahrzeuges 2 folgen. Die Aktoren 21' können ebenfalls anhand der ermittelten Richtungsänderung β, insbesondere zeit- oder wegabhängig durch die Auswerteeinheit 3 angesteuert oder geregelt werden. Die Arbeitswerkzeuge 17 und 18 können als Ausleger mit Ausbringwerkzeugen ausgebildet sein. Ebenso können die Arbeitswerkzeuge 17 und 18 als ein gemeinsamer oder mehrere Ausleger mit Bodenbearbeitungswerkzeugen ausgebildet sein. Zum Steuern der Arbeitswerkzeuge 17 und 18 muss nicht zwingend eine Zugdeichsel 26 und/oder eine Fahrwerksachse 25 vorhanden sein. Vielmehr kann der Rahmen 24 des Arbeitsgerätes auch, wie weiter oben beschrieben, direkt per Ober- und Unterlenkern mit dem Fahrzeug verbunden sein. Somit können gleichzeitig Nickbewegungen, wie in Figuren 1-3 beschrieben, als auch Lenkbewegungen zwischen Fahrzeug 2 und Arbeitsgerät 1, wie aus Figur 4 ersichtlich, sowie deren Richtungsänderungen korrigiert und angepasst werden. Ebenso ist der Ausgleich von Kippbewegungen zwischen Fahrzeug 2 und Arbeitsgerät 1 aus einer Vorder- oder Rückansicht der Kombination denkbar.

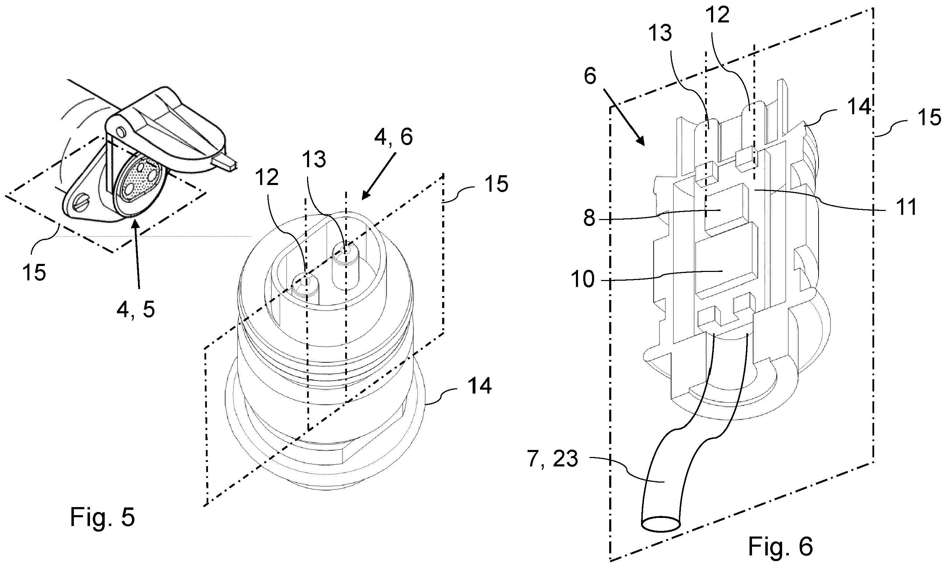

Figur 5 zeigt den Stecker 6 und eine Steckdose 5 der Steckverbindung 4. Der Stecker 6 besteht aus einem Gehäuse 14 mit zwei nach außen herausragenden, elektrischen Steckkontakten 12 und 13 , welche eine stromführende Verbindung mit den daneben schematisch dargestellten Steckbuchsen der Steckdose 5 aus den vorherigen Figurenbeschreibungen herstellt, indem der Stecker 6 in die Steckdose 5 eingesteckt wird. Das Gehäuse 14 weist eine Schutzhülle auf, mit welcher eine Verdrehsicherung des Steckers 4 mit einer korrespondierenden Form der Steckdose 5 zwecks Verpolungsschutz und stets gleicher Ausrichtung zwischen Stecker 6 und Steckdose 5 der Steckverbindung 4 erreicht wird. Die Mittelachsen der Steckkontakte 12, 13 spannen eine Ebene 15 auf, welche der Ausrichtung der Fahrzeugebene 15 aus den vorherigen Figuren entspricht. Ein Beispiel der Formgebung des Gehäuses kann den Normen DIN 9680, ISO 1724 oder ISO 11783-(2) entnommen werden.

Figur 6 zeigt in einer Schnittzeichnung parallel zur Ebene 15 das Innenleben des Steckers 6. Mit den beiden Steckkontakten 12 und 13 ist eine Leiterplatte 11 (PCB, printed circuit board) elektrisch und vorzugsweise auch mechanisch verbunden. Das Gehäuse 14 weist zusätzliche Ausnehmungen oder Vorsprünge zur formschlüssigen Aufnahme der Leiterplatte 11 auf, um diese im verschlossenen Zustand des Gehäuses 14 gegen Verschiebung oder Verdrehung zu sichern.

Leiterbahnen auf der Rückseite der Leiterplatte 11 leiten den elektrischen Strom von den Steckkontakten 12, 13 in das gegenüberliegende Kabel 7 und versorgen zugleich den auf der Vorderseite der Leiterplatte 11 angeordneten Sensor 8 und, sofern erforderlich, einen Transmitter 10 zur Signal- oder Messwertübermittlung in die ebenfalls durch das Kabel 7 geführte Signalverbindung 23. Ebenso kann der Transmitter 10 mit einem Funk- oder Kommunikationsmodul oder gemeinsam mit einem Microcomputer als integrierte Schaltung (SOC, System on a chip) ausgebildet sein. Vorzugsweise ist auch der Sensor 8 als elektrisches oder elektromechanisches System, beispielsweise innerhalb eines gleichen oder weiteren SOC's oder einer gemeinsamen Baueinheit integriert. Der Sensor 8 kann einachsig oder in mehreren, vorzugsweise senkrecht zueinander ausgerichteten Achsen im Raum physikalische Größen detektieren oder messen. Die Achsausrichtung verläuft vorzugsweise parallel zu drei auf einander treffender Gehäusekanten des Sensors 8, also einem orthogonalem Koordinatensystem X,Y,Z. Sowohl der Transmitter 10 als auch Sensor 8 sind vorzugsweise mit den Leiterbahnen der Leiterplatte verlötet oder zumindest galvanisch verbunden.

Es folgen 5 Blatt mit Zeichnungen.

**BEZUGSZEICHENLISTE**

| | |
|---|---|
| 1 | Arbeitsgerät |
| 2 | Fahrzeug |
| 3 | Auswerteeinrichtung |
| 4 | Steckverbindung |
| 5 | Steckdose |
| 6 | Stecker |
| 7 | Kabel |
| 8 | Sensor |
| 9 | Anzeigevorrichtung |
| 10 | Transmitter |
| 11 | Platine, Leiterplatte |
| 12 | Steckkontakt |
| 13 | Steckkontakt |
| 14 | Gehäuse |
| 15 | Fahrzeugebene |
| 16 | Geräteebene |
| 17 | Arbeitswerkzeug |
| 18 | Arbeitswerkzeug |
| 19 | Tiefenführung |
| 20 | Bodenoberfläche |
| 21 | Aktor |
| 22 | Unterlenker |
| 23 | Signalverbindung |
| 24 | Rahmen |
| 25 | Fahrwerksachse |
| 26 | Deichsel |
| 27 | Gelenk |
| 28 | Anhängekupplung |

## Patentansprüche

1. Steckverbindung (4) zur vorzugsweise elektrischen Kopplung eines Fahrzeuges (2) mit einem Arbeitsgerät (1), wobei das Arbeitsgerät (1) dem Fahrzeug (2) beweglich zugeordnet ist, wobei das Fahrzeug (2) oder das zugeordnete Arbeitsgerät (1) die Steckverbindung (4) aufweist,
**dadurch gekennzeichnet,**
**dass** die Steckverbindung (4) zumindest ein Sensor (8) zur Erfassung zumindest einer physikalischen Größe aufweist.

2. Steckverbindung nach Anspruch 1,
**dadurch gekennzeichnet,**
**dass** die Steckverbindung (4) eine Signalverbindung (7) zur Übermittlung von zumindest einem Parameter der erfassten physikalischen Größe des Sensors (8) der Steckverbindung an eine Auswerteeinrichtung (3) aufweist.

3. Steckverbindung nach Anspruch 1 oder 2,
wobei der Sensor (8) als Neigungssensor, Beschleunigungssensor, Drehratensensor oder Gyroskop ausgebildet ist.

4. Steckverbindung nach zumindest einem der vorstehenden Ansprüche, wobei die Steckverbindung (4) einen lösbaren (6) Teil und einen feststehenden Teil (5) ausweist,
**dadurch gekennzeichnet,**
**dass** der feststehende Teil (5) mit dem Fahrzeug (2) oder dem Arbeitsgerät (1) unbeweglich verbunden ist sowie der lösbare Teil (6) den Sensor (8) zur Ermittlung der physikalischen Größe ausweist.

5. Kombination aus einem Fahrzeug (2) und Arbeitsgerät (1) mit einer Steckverbindung (4) nach zumindest einem der vorstehenden Ansprüche,
**dadurch gekennzeichnet,**
**dass** die Auswerteeinrichtung (3) dem Fahrzeug (2) und die Steckverbindung (4) dem Gerät (1) oder umgekehrt die Auswerteeinrichtung (3) dem Gerät (1) und die Steckverbindung (4) dem Fahrzeug (2) zugeordnet ist.

6. Kombination nach Anspruch 5,
**dadurch gekennzeichnet,**
**dass** die Auswerteeinrichtung (3) als Jobrechner ausgebildet ist, wobei der Jobrechner zumindest einen weiteren Parameter des Arbeitsgerätes (1) oder des Fahrzeug (2) ermittelnd oder beeinflussend ausgebildet ist.

7. Kombination nach Anspruch 5,
**dadurch gekennzeichnet,**
**dass** dem Arbeitsgerät (1) und / oder dem Fahrzeug (2) zumindest ein Aktor (21) zugeordnet ist, wobei der Aktor (21) derart angeordnet ist, dass die räumliche Lage zwischen dem Arbeitsgerät (1) und dem Fahrzeug (2) durch Betätigen des Aktors (21) eingestellt oder geändert werden kann.
